# EUROPEAN PATENT SPECIFICATION

(11) **EP 3 499 357 B1**
(45) Date of publication and mention of the grant of the patent: **30.12.2020**
(21) Application number: 17842520.3
(22) Date of filing: 16.01.2017
(51) Int. Cl.: G06F 3/06, H04L 12/801, H04L 12/931, H04L 12/825, H04L 12/835, H04L 12/861

(54) **DATA PROCESSING METHOD AND PHYSICAL MACHINE**
DATENVERARBEITUNGSVERFAHREN UND PHYSISCHE MASCHINE
PROCÉDÉ DE TRAITEMENT DE DONNÉES ET MACHINE PHYSIQUE

(30) Priority: 25.08.2016 CN 201610723610
(43) Date of publication of application: 19.06.2019
(60) Divisional application: 20207720.2
(73) Proprietor: Huawei Technologies Co., Ltd., Longgang District Shenzhen, Guangdong 518129 (CN)
(72) Inventor: ZHANG, Zhaozhong, Shenzhen Guangdong 518129 (CN); ZHU, Yun, Shenzhen Guangdong 518129 (CN); HUANG, Wei, Shenzhen Guangdong 518129 (CN)
(74) Representative: Goddar, Heinz J.
(86) International application number: PCT/CN2017/071282
(87) International publication number: WO 2018/036094

(56) References cited:
- CN-A- 101 089 819
- CN-A- 103 227 999
- CN-A- 103 530 189
- US-A1- 2013 166 618
- ZHIMING SHEN ET AL: "CloudScale", CLOUD COMPUTING, ACM, 2 PENN PLAZA, SUITE 701 NEW YORK NY 10121-0701 USA, 26 October 2011 (2011-10-26), pages 1-14, XP058005039, DOI: 10.1145/2038916.2038921 ISBN: 978-1-4503-0976-9
- LOHRMANN BJORN ET AL: "Elastic Stream Processing with Latency Guarantees", PROCEEDINGS OF THE INTERNATIONAL CONFERENCE ON DISTRIBUTED COMPUTING SYSTEMS, IEEE COMPUTER SOCIETY, US, 29 June 2015 (2015-06-29), pages 399-410, XP033180511, ISSN: 1063-6927, DOI: 10.1109/ICDCS.2015.48 [retrieved on 2015-07-22]
- ZACHEILAS NIKOS ET AL: "Elastic complex event processing exploiting prediction", 2015 IEEE INTERNATIONAL CONFERENCE ON BIG DATA (BIG DATA), IEEE, 29 October 2015 (2015-10-29), pages 213-222, XP032836983, DOI: 10.1109/BIGDATA.2015.7363758

## Description

### TECHNICAL FIELD

The present invention relates to the field of computer technologies, and in particular, to a data processing method and a physical machine.

### BACKGROUND

In recent years, a new data-intensive application is widely recognized, and such an application is characterized by the following: It is appropriate to model by using a transient data stream instead of a persistent stable relationship. Instances of these applications include a financial service, a web (English: Web) application, telecommunication data management, manufacturing, sensing and detection, and the like. Data occurs constantly in a form of massive, rapid, and time-varying data streams, and therefore, some new basic researches are generated. For example, a research on data stream calculation is generated.

Data stream calculation follows the following rule: Because data value decreases as time elapses, events need to be processed as soon as possible after the events occur, and it is best to immediately process data when the data occurs. One event is processed once when occurring, instead of being cached for batch processing.

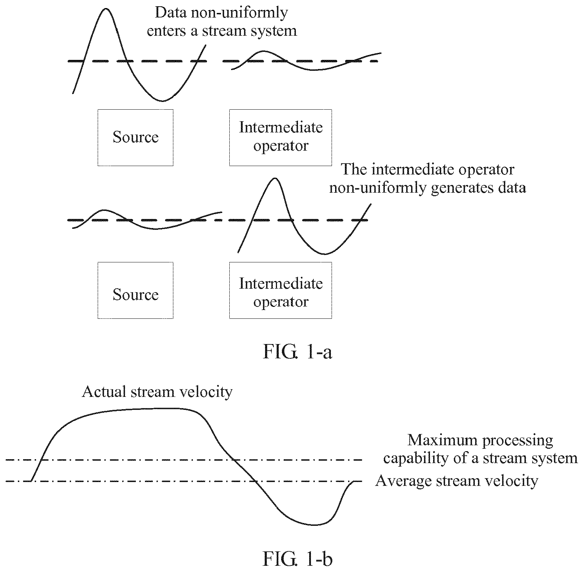

Data stream calculation is performed based on a streaming data processing model, and data enters operators of levels for processing, and then, is output. In an actual use process, data in a stream system flows non-uniformly. As shown in FIG. 1-a, FIG. 1-a is a schematic diagram of a stream velocity non-uniformity state of a data stream. A source receives data from the outside at a non-uniform stream velocity, and an intermediate operator generates data at a non-uniform stream velocity. The following describes the foregoing two cases in detail. For one reason, a stream velocity of an original data stream entering the stream system is non-uniform. A velocity may be quite high in a period of time, but quite low in another period of time. For example, a set of stream systems is deployed to detect usage of traffic of call-making or Internet surfing by a user. Busy-hour traffic at night is far more than traffic early in the morning, and traffic during the Spring Festival is far more than usual traffic. This is determined by the laws of human activities, not by the will of humans. Another reason is processing logic of some operators. For example, an operator is dedicatedly configured to collect statistics about traffic usage of each user every five minutes. A large amount of data is output when five minutes end, but there is almost no output at a time point in the middle of the five minutes. This is determined by processing logic of the operator. Because of the foregoing two reasons, when traffic is large, a stream velocity of a data stream may exceed a maximum processing capability of the stream system. In this case, if no measures are taken, a data loss is caused, and result accuracy is affected. As shown in FIG. 1-b, FIG. 1-b is a schematic diagram of a variation curve of an actual stream velocity. In a long time, an average stream velocity of the data stream does not exceed the maximum processing capability of the stream system. Therefore, on this premise, it needs to be ensured that bandwidth-hungry data at some moments is not lost, and in this case, a stream velocity control problem emerges.

The stream velocity control problem is a quite important technical problem in a stream technology, because almost all stream systems encounter the foregoing short-time bandwidth-hungry problem, that is, a data peak. If no stream velocity control measures are taken, a data loss certainly occurs in this period of time. On some occasions requiring high data reliability, impact of the data loss on reliability cannot be ignored. For example, the data loss is totally unacceptable in the financial field.

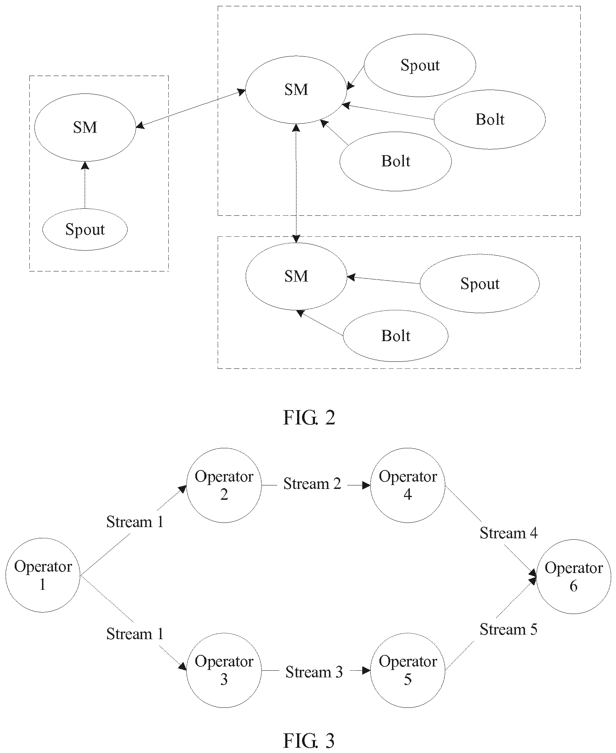

As shown in FIG. 2, FIG. 2 is a schematic diagram of a stream velocity control solution used in a stream processing system in the prior art. Each traffic management unit (English full name: Stream Manager, SM for short) manages a data source operator (a spout is used as an example for description in the figure) and a data processing operator (a bolt is used as an example for description in the figure). The SM can monitor the data processing operator managed by the SM. The SM is aware when a bolt is congested. In this case, the SM sends a stop message to notify another SM, and when receiving the message, the another SM takes measures to enable the data source operator to stop sending data. When the congested bolt is not congested any longer, the SM in which the bolt is located sends a resuming message to another SM, and after receiving the resuming message, the another SM instructs a local spout to resume sending data.

In the foregoing stream velocity control solution, an SM needs to be aware of whether a spout is congested, and then instructs another SM to act. This certainly causes a specific delay, and data that has entered a stream system in a time period in which the delay exists is very likely to be lost. Consequently, data reliability of the stream processing system is affected.
ZHING SHEN ET AL: "CloudScale", CLOUD COMPUTING ACM, 2 PENN PLAZA, SUITE 701 NEW YORK NY 10121-0701 USA, 26 October 2011 (2011-10-26), pages 1-4 discloses CloudScale, a system that automates fine-grained elastic resource scaling for multi-tenant cloud computing infrastructures. CloudScale employs online resource demand prediction an prediction error handling to achieve adaptive resource allocation without assuming any prior knowledge about the applications running inside the cloud. CloudScale can resolve scaling conflicts between applications using migration, and integrates dynamic CPU voltage/frequency scaling to achieve energy savings with minimal effect on application SLOs. We have implemented CloudScale on top of _Xen and conducted extensive experiments using a set of CPU and memory intensive applications (RUBiS, Hadoop, IBM System S). The results show that CloudScale can achieve significantly higher SLO conformance than other alternatives with low resource and energy cost. CloudScale is non-intrusive and light-weight, and imposes negligible overhead (< 2% CPU in Domain 0) to the virtualized computing cluster.

### SUMMARY

The present invention provides a data processing method of claim 1 and a physical machine of claim 4, so as to reduce a data loss in a process in which an executor processes data in a data stream. Further implementations are disclosed in the dependent claims. In the following, aspects and embodiments not covered by the claims shall be considered as examples helpful for understanding the invention.

To resolve the foregoing technical problem, the embodiments of the present invention provide the following technical solutions:

According to a first aspect, an embodiment of the present invention provides a data processing method according to claim 1.

In this embodiment of the present invention, because the physical machine may predict the traffic of the coming data stream of the first executor according to the historical information about processing data by the first executor, if a predictor in traffic prediction exceeds the threshold, the data obtaining velocity of the first executor is reduced from the first velocity to the second velocity, so that the first executor can reduce a data stream obtaining velocity. When data stream peak duration is relatively long, a problem that a processing capability of the first executor is exceeded because excessive data streams flow to the physical machine can still be avoided, so that data stream processing reliability can be improved, and a data loss caused because a data peak arrives when the first executor obtains the data stream can be avoided.

With reference to the first aspect, in a first possible implementation of the first aspect, the method further includes: if the traffic prediction information includes no predictor that exceeds the threshold, keeping the data obtaining velocity of the first executor unchanged at the first velocity, and obtaining a second data set of the to-be-processed data stream at the first velocity; and if the second data set is greater than a maximum data processing threshold of the first executor, storing, in a receiving cache queue of the first executor, a first subset in the second data set.

In this embodiment of the present invention, the receiving cache queue may be used to store the first subset in the second data set, and the first subset refers to some data in the second data set. The first subset may be stored in the receiving cache queue of the first executor, so that a data loss of the first subset in the physical machine is avoided.

With reference to the first possible implementation of the first aspect, in a second possible implementation of the first aspect, the second data set further includes a second subset, and the method further includes: if the receiving cache queue of the first executor is full, storing the second subset in an external memory of the first executor, where the second subset includes a data packet that is in the second data set, that is not processed by the first executor, and that is not stored in the receiving cache queue.

In this embodiment of the present invention, if the receiving cache queue is full, the second subset is stored in the external memory by writing the second subset into a disk file, and the second subset is obtained from the external memory when the first executor is idle. By using the receiving cache queue and the external memory, the first executor can well resolve a data loss problem that may be caused when there is a data peak, and resolve a data loss problem caused by a data peak that occurs because an external data source fluctuates.

With reference to the first aspect, or the first or the second possible implementation of the first aspect, in a third possible implementation of the first aspect, the method further includes: if the first data set is greater than the maximum data processing threshold of the first executor, stopping obtaining data in the to-be-processed data stream.

In this embodiment of the present invention, congestion conduction is implemented by using a message channel mechanism. When a processing capability of a downstream computing node is insufficient, data receiving is stopped, and in this case, an upstream computing node cannot send data to the downstream computing node. In this way, congestion can be conducted to the upstream computing node. Therefore, an amount of data entering the physical machine can be reduced, and a data loss caused because the first executor cannot perform processing can be avoided.

With reference to the first aspect, or the first or the second possible implementation of the first aspect, in a fourth possible implementation of the first aspect, the method further includes: processing the first data set, so as to obtain a third data set; storing, in a sending cache queue of the first executor, data in the third data set; and sending the data in the third data set to a second executor by using the sending cache queue, so that the second executor processes the data in the third data set, where the second executor is a downstream computing node of the first executor in the stream system.

In this embodiment of the present invention, the sending cache queue is configured on the first executor, so that a data loss can be reduced as much as possible, and data stream processing reliability can be improved.

According to a third aspect, an embodiment of the present invention further provides a physical machine according to claim 4.

In this embodiment of the present invention, because the physical machine may predict the traffic of the coming data stream of the first executor according to the historical information about processing data by the first executor, if a predictor in traffic prediction exceeds the threshold, the data obtaining velocity of the first executor is reduced from the first velocity to the second velocity, so that the first executor can reduce a data stream obtaining velocity. When data stream peak duration is relatively long, a problem that a processing capability of the first executor is exceeded because excessive data streams flow to the physical machine can still be avoided, so that data stream processing reliability can be improved, and a data loss caused because a data peak arrives when the first executor obtains the data stream can be avoided.

In the third aspect of the present invention, a composition module of the physical machine may further perform the steps described in the preceding first aspect and the various possible implementations. For details, refer to the descriptions in the preceding first aspect and the various possible implementations.

According to a fifth aspect, an embodiment of the present invention further provides a physical machine, including: a receiver, a transmitter, a processor, and a memory, where the processor, the receiver, the transmitter, and the memory are connected by using a bus, and the processor may be configured to implement a function of a first executor; and the processor is configured to execute the method in any one of the preceding first aspect.

In this embodiment of the present invention, because the physical machine may predict traffic of a coming data stream of the first executor according to historical information about processing data by the first executor, if a predictor in traffic prediction exceeds a threshold, a data obtaining velocity of the first executor is reduced from a first velocity to a second velocity, so that the first executor can reduce a data stream obtaining velocity. When data stream peak duration is relatively long, a problem that a processing capability of the first executor is exceeded because excessive data streams flow to the physical machine can still be avoided, so that data stream processing reliability can be improved, and a data loss caused because a data peak arrives when the first executor obtains the data stream can be avoided.

### BRIEF DESCRIPTION OF DRAWINGS

To describe the technical solutions in the embodiments of the present invention more clearly, the following briefly describes the accompanying drawings required for describing the embodiments. Apparently, the accompanying drawings in the following description show merely some embodiments of the present invention, and persons skilled in the art may still derive other drawings from these accompanying drawings.
FIG. 1-a is a schematic diagram of a stream velocity non-uniformity state of a data stream in the prior art;
FIG. 1-b is a schematic diagram of a variation curve of an actual stream velocity in the prior art;
FIG. 2 is a schematic diagram of a stream velocity control solution used in a stream processing system in the prior art;
FIG. 3 is a schematic diagram of an implementation scenario in which a data processing method is applied to a stream system according to an embodiment of the present invention;
FIG. 4 is a schematic block diagram of a procedure of a data processing method according to an embodiment of the present invention;
FIG. 5 is a schematic block diagram of a procedure of another data processing method according to a non-claimed example.
FIG. 6 is a schematic architectural diagram of a system to which a data processing method is applied according to an embodiment of the present invention;
FIG. 7 is a schematic diagram of an implementation scenario in which a source operator predicts data traffic according to an embodiment of the present invention;
FIG. 8 is a schematic diagram of an implementation scenario in which a source operator caches data traffic according to an embodiment of the present invention;
FIG. 9 is a schematic diagram of an implementation scenario in which an intermediate operator performs backpressure control processing on data traffic according to an embodiment of the present invention;
FIG. 10 is a schematic diagram of an implementation scenario of a scalable cache queue used by an intermediate operator according to an embodiment of the present invention;
FIG. 11-a is a schematic structural diagram of composition of a physical machine according to an embodiment of the present invention;

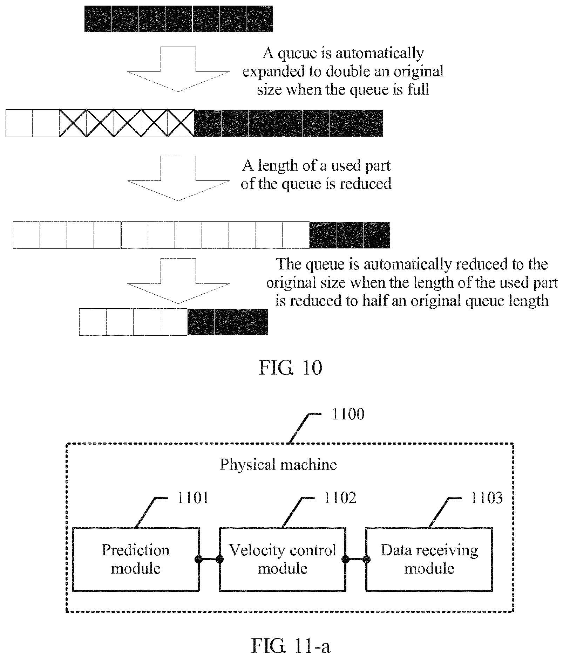

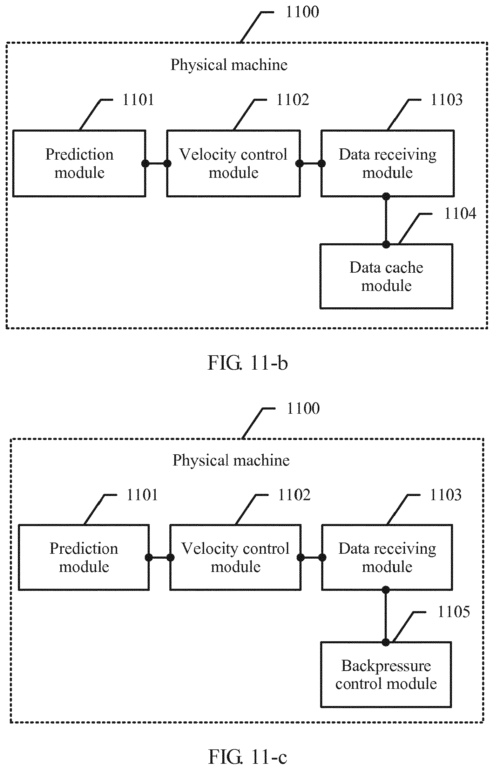

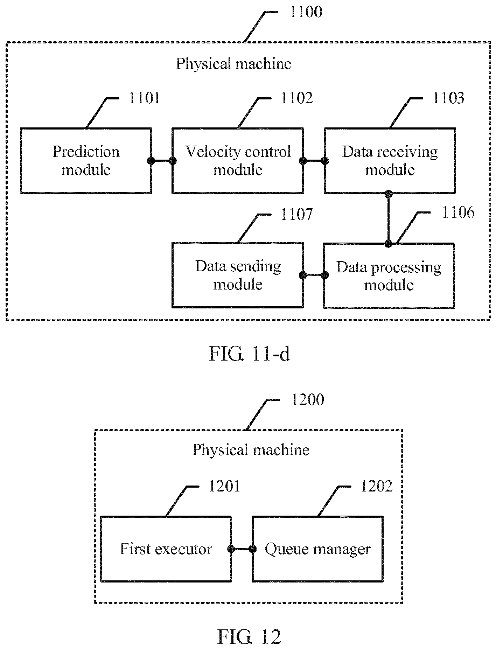

FIG. 11-b is a schematic structural diagram of composition of another physical machine according to an embodiment of the present invention;
FIG. 11-c is a schematic structural diagram of composition of another physical machine according to an embodiment of the present invention;
FIG. 11-d is a schematic structural diagram of composition of another physical machine according to an embodiment of the present invention;
FIG. 12 is a schematic structural diagram of composition of another physical machine according to a non-claimed example; and

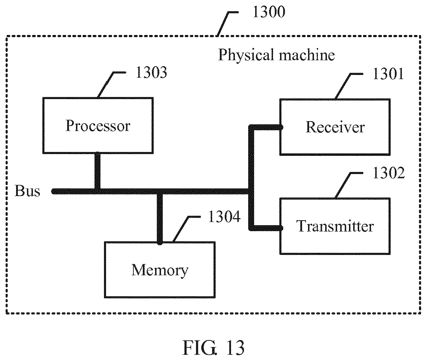

FIG. 13 is a schematic structural diagram of composition of another physical machine according to an embodiment of the present invention.

### DESCRIPTION OF EMBODIMENTS

Embodiments of the present invention provide a data processing method and a physical machine, so as to reduce a data loss in a process in which an executor processes data in a data stream.

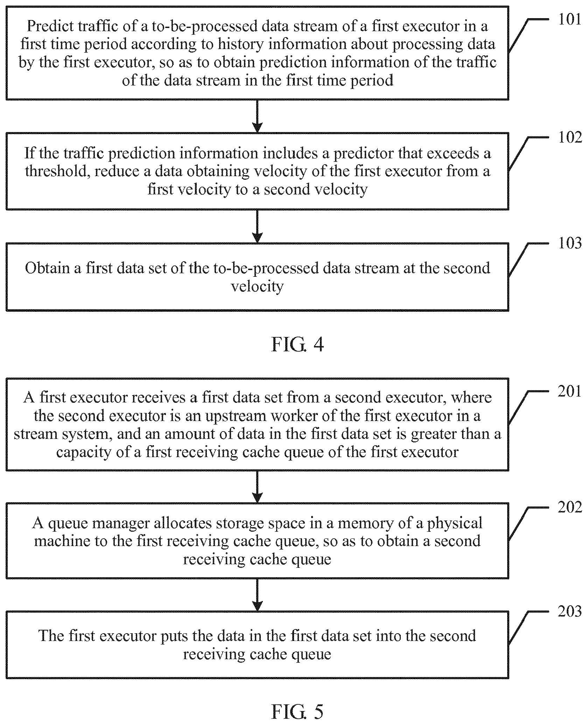

To make the invention objectives, features, and advantages of the present invention clearer and more comprehensible, the following clearly and completely describes the technical solutions in the embodiments of the present invention with reference to the accompanying drawings in the embodiments of the present invention. Apparently, the embodiments described in the following are merely some rather than all of the embodiments of the present invention. In the following, the embodiments described with reference to figures 5 and 12 do not fall under the scope of the claims.

In the specification, claims, and accompanying drawings of the present invention, the terms "first", "second", and so on are intended to distinguish between similar objects but do not necessarily indicate a specific sequence. It should be understood that the terms used in such a way are interchangeable in proper circumstances, and this is merely a discrimination manner that is used when objects having a same attribute are described in the embodiments of the present invention. In addition, the terms "include", "contain", and any other variants mean to cover the non-exclusive inclusion, so that a process, method, system, product, or device that includes a series of units is not necessarily limited to those units, but may include other units not expressly listed or inherent to such a process, method, system, product, or device.

The data processing method provided in the embodiments of the present invention may be applied to a physical machine in a stream system. The stream system may also be referred to as a "streaming data processing system", and the stream system is mainly used for processing a data stream in real time. The stream system may include multiple physical machines, computing nodes that have an upstream/downstream relationship with each other may be deployed on each physical machine, each computing node is referred to as one operator, and the computing node is a carrier of service logic, and is a minimum unit that can be scheduled and executed by the stream system in a distributed manner. The executor is a physical service logic execution unit, and may dynamically load and execute the service logic carried by the computing node. For example, a first executor is deployed on the physical machine in the stream system, other computing nodes may be deployed in upstream and downstream of the first executor in the stream system, and these computing nodes may belong to a same physical machine, or may separately belong to different physical machines. The executor may be a thread in the physical machine, the executor may be deployed on the physical machine by using a virtual machine or a container, and a processor in the physical machine may be configured to implement a stream velocity control function of the executor. Stream velocity control refers to some control measures that are taken for imbalance between a stream velocity of data entering the stream system and a processing velocity of the stream system.

A data processing method embodiment of the present invention may be applied to an application scenario in which a data loss is reduced in a stream system. As shown in FIG. 3, FIG. 3 is a schematic diagram of an implementation scenario in which a data processing method to which an operator is applied is applied to a stream system according to an embodiment of the present invention. In the stream system provided in this embodiment of the present invention, service data processing logic needs to be converted into a data processing mode shown in a directed acyclic graph (English full name: Directed Acyclic Graph, DAG for short), the operator (English: Operator) carries an actual data processing operation, and streaming data is transmitted between operators. For example, a stream in FIG. 3 represents data transmission between operators. This is similar to a pipeline data processing mode, and all operators may be executed in a distributed manner. In FIG. 3, an operator 1 transmits a stream 1 to each of an operator 2 and an operator 3, the operator 2 transmits a stream 2 to an operator 4, the operator 4 transmits a stream 4 to an operator 6, the operator 3 transmits a stream 3 to an operator 5, and the operator 5 transmits a stream 5 to the operator 6. In the DAG, the operator 1 is a source operator, the operator 2, the operator 3, the operator 4, and the operator 5 are intermediate operators, and the operator 6 is an end operator. Serving as the source operator, the operator 1 may be specifically a first operator described in the embodiments of the present invention, and a first executor configured on the first operator can resolve a data loss problem existing after data enters a physical machine. The following describes in detail a data processing method provided in an embodiment of the present invention. The method is applied to a physical machine in a stream system, and the physical machine includes a first executor. As shown in FIG. 4, the data processing method provided in this embodiment of the present invention may include the following steps.

101. Predict traffic of a to-be-processed data stream of the first executor in a first time period according to historical information about processing data by the first executor, so as to obtain prediction information of the traffic of the data stream in the first time period.

The historical information includes traffic information of data processed by the first executor in a historical time period, and the traffic prediction information includes predictors of traffic at multiple moments in the first time period.

In this embodiment of the present invention, an executor (English full name: Process Element, PE for short) is a physical service logic execution unit, and may dynamically load and execute service logic carried by an operator, that is, the executor is an execution body of the operator, and the executor is responsible for implementing the service logic of the operator. Specifically, the first executor is deployed on a first operator, and data traffic control of the first operator may be completed by using the first executor. In this embodiment of the present invention, the first executor first obtains the historical information about processing data by the first executor, and the historical information includes the traffic information of the data processed by the first executor in the historical time period, and is obtained by collecting statistics about data traffic by the first executor in the historical time period for multiple times. The traffic of the to-be-processed data stream of the first executor in the first time period may be predicted according to the historical information, so that the prediction information of the traffic of the data stream in the first time period is obtained. The to-be-processed data stream is a data stream that needs to be obtained by the first executor in the first time period. For example, historical information generated when the first executor processed data in past 24 hours may be analyzed, and data traffic in the coming first time period may be predicted based on this.

102. If the traffic prediction information includes a predictor that exceeds a threshold, reduce a data obtaining velocity of the first executor from a first velocity to a second velocity.

In this embodiment of the present invention, the physical machine may preconfigure the threshold for the first executor. After the predictor in the traffic prediction information is obtained by performing the preceding step, it is determined whether the predictor of the traffic exceeds the threshold. If the traffic prediction information includes a predictor that exceeds the threshold, it indicates that a data traffic peak may occur in the first executor in coming time, and the data obtaining velocity of the first executor may be reduced according to a predicted case. That is, a data receiving velocity of the first executor is reduced, for example, the original first velocity of the first executor may be reduced to the second velocity. In this way, the first executor can maintain a state of data receiving at an approximately uniform velocity to a greatest extent, and cancel a peak of a data stream entering the physical machine, so that a data loss caused because a large amount of abrupt data traffic cannot be processed in a timely manner is avoided, and a data loss caused because data entering the physical machine exceeds a maximum data processing capability of the first executor is avoided.

103. Obtain a first data set of the to-be-processed data stream at the second velocity.

In this embodiment of the present invention, after the data traffic of the first executor is predicted by performing the preceding step, the data obtaining velocity may be reduced according to a predicted data traffic peak, and the first data set of the data stream may be obtained at the reduced data obtaining velocity (that is, the second velocity), so that the data traffic receiving velocity is reduced, an amount of data received by the first executor is reduced, and the data loss caused because the data processing capability of the first executor is exceeded is avoided. The first data set is a data set obtained when the data stream is received at the second velocity. In subsequent embodiments, to describe data sets more clearly, a "first data set", a "second data set", and a "third data set" are separately used to distinguish between data sets in different processing phases and different states.

In some embodiments of the present invention, step 103 in which the first data set of the to-be-processed data stream is obtained at the second velocity may specifically include either of the following steps.
A1. Generate the first data set of the to-be-processed data stream at the second velocity.
A2. Receive, at the second velocity, data sent by an external data source, so as to obtain the first data set of the to-be-processed data stream.

The first executor may be configured to generate a data stream. In this case, after the first executor reduces the data obtaining velocity, the first executor may reduce a data stream generation velocity. For another example, the first operator does not generate a data stream. In this case, the first operator may receive a data stream from an external data source, and the first executor may reduce the data receiving velocity, so as to reduce an amount of received data, and avoid a data loss caused because an amount of data entering the physical machine exceeds processing load of the first executor.

In some embodiments of the present invention, in addition to the preceding steps, the data processing method provided in this embodiment of the present invention includes the following steps.
B1. If the traffic prediction information includes no predictor that exceeds the threshold, keep the data obtaining velocity of the first executor unchanged at the first velocity, and obtain a second data set of the to-be-processed data stream at the first velocity.
B2. If the second data set is greater than a maximum data processing threshold of the first executor, store, in a receiving cache queue of the first executor, a first subset in the second data set.

If the traffic prediction information generated by the physical machine includes no predictor that exceeds the threshold, it indicates that no data peak occurs on the data stream obtained by the first executor, and extremely large data traffic may not occur. The data obtaining velocity of the first executor is kept unchanged at the first velocity, and the second data set of the to-be-processed data stream is obtained at the first velocity. The second data set is a data set obtained when the data stream is received at the first velocity.

After the second data set is received, an amount of data included in the second data set is analyzed, to determine whether the second data set is greater than the maximum data processing threshold of the first executor. The maximum data processing threshold of the first executor is a value that is determined according to a hardware configuration or a software configuration of the first executor and that indicates a maximum amount of data that can be processed in a unit time. If the second data set is greater than the maximum data processing threshold of the first executor, it indicates that the amount of data in the second data set received by the first executor exceeds the maximum data processing threshold of the first executor, and therefore, a data loss occurs. In this embodiment of the present invention, the receiving cache queue is further configured on the first executor, and the receiving cache queue may be implemented by obtaining some storage space by a queue manager in the physical machine from a memory of the physical machine. The receiving cache queue may be used to store the first subset in the second data set, and the first subset refers to some data in the second data set. The first subset may be stored in the receiving cache queue of the first executor, so that a data loss of the first subset in the physical machine is avoided.

In some embodiments of the present invention, the second data set may include a second subset in addition to the first subset. In addition to the preceding steps, the data processing method provided in this embodiment of the present invention includes the following step.

C1. If the receiving cache queue of the first executor is full, store the second subset in an external memory of the first executor, where the second subset includes a data packet that is in the second data set, that is not processed by the first executor, and that is not stored in the receiving cache queue.

Specifically, the first subset in the second data set is stored in the receiving cache queue of the first executor. After the first subset is stored in the receiving cache queue, if the receiving cache queue is full, because the second subset in the second data set is not stored, to avoid a data loss of the second subset, in this embodiment of the present invention, in addition to the receiving cache queue used for storing data, the external memory may be configured for the first executor. Two data cache manners may be used for the first executor. The receiving cache queue may be configured by using the memory of the first executor, and the first executor may use the external memory in addition to the receiving cache queue. The first subset is stored in the receiving cache queue to make full use of a memory capacity. If the receiving cache queue is full, the second subset is stored in the external memory by writing the second subset into a disk file, and the second subset is obtained from the external memory when the first executor is idle. By using the receiving cache queue and the external memory, the first executor can well resolve a data loss problem that may be caused when there is a data peak, and resolve a data loss problem caused by a data peak that occurs because an external data source fluctuates.

In some embodiments of the present invention, in addition to the preceding steps, the data processing method provided in this embodiment of the present invention includes the following step.

D1. If the first data set is greater than the maximum data processing threshold of the first executor, stop obtaining data in the to-be-processed data stream.

Specifically, in the present invention, after receiving the first data set at the second velocity, the physical machine analyzes an amount of data included in the first data set, to determine whether the first data set is greater than the maximum data processing threshold of the first executor. The maximum data processing threshold of the first executor is a value that is determined according to a hardware configuration or a software configuration of the first executor and that indicates a maximum amount of data that can be processed in a unit time. If the first data set is greater than the maximum data processing threshold of the first executor, it indicates that the amount of data in the first data set received by the first executor exceeds the maximum data processing threshold of the first executor, and therefore, a data loss occurs. In this case, the first executor may enable a backpressure control policy to stop the first executor from obtaining a data stream, that is, the first executor does not receive a data stream any more. Backpressure control performed by the first executor is similar to a feedback principle in cybernetics. That is, when being overloaded, the first executor takes measures for an upstream computing node of the first executor or an external data source, so that less data is sent to the first executor or data is no longer sent to the first executor, and therefore, load of the first executor is lightened. Therefore, an amount of data entering the physical machine can be reduced, and a data loss caused because the first executor cannot perform processing can be avoided.

In some embodiments of the present invention, in addition to the preceding steps, the data processing method provided in this embodiment of the present invention includes the following steps.
E1. Process the first data set, so as to obtain a third data set.
E2. Store, in a sending cache queue of the first executor, data in the third data set.
E3. Send the data in the third data set to a second executor by using the sending cache queue, so that the second executor processes the data in the third data set, where the second executor is a downstream computing node of the first executor in the stream system.

In the foregoing embodiment of the present invention, after the to-be-processed first data set is obtained, the first executor may perform service processing on the to-be-processed first data set according to service processing logic configured for the first executor, so as to obtain the third data set. The service processing logic refers to a specific manner in which the first executor processes data, the service processing logic may be generally determined with reference to a specific application scenario, and this is not limited herein. For example, the service processing logic may be extracting a target field from the first data set, so that the third data set is obtained, or the service processing logic may be adding preset information to the first data set, so that the third data set is obtained.

In the foregoing embodiment of the present invention, a sending cache queue is further configured on the first executor, and the sending cache queue may be implemented by obtaining some storage space by the queue manager in the physical machine from the memory of the physical machine. The sending cache queue may be used to store data obtained by the physical machine. For example, after obtaining the third data set, the physical machine may store the third data set in the sending cache queue, and then, the physical machine may extract data in the third data set from the sending cache queue, and send the data to the second executor, so that the second executor processes the data in the third data set. The second executor is a downstream computing node of the first executor in the stream system. For example, the second executor may be a downstream computing node in a physical machine that is the same as the physical machine in which the first executor is located, or may be a computing node in a physical machine that is different from the physical machine in which the first executor is located, and this is not limited herein.

For example, the physical machine obtains some data in the third data set from the sending cache queue of the first executor, and then sends the some data to the second executor; and then continues to read other data in the sending cache queue, and then sends the data to the second executor until all data in the sending cache queue is sent to the second executor. The sending cache queue is configured on the first executor, so that a data loss can be reduced as much as possible, and data stream processing reliability can be improved.

It may be learned from the example description of the present invention in the preceding embodiment that, because a physical machine may predict traffic of a coming data stream of a first executor according to historical information about processing data by the first executor, if a predictor in traffic prediction exceeds a threshold, a data obtaining velocity of the first executor is reduced from a first velocity to a second velocity, so that the first executor can reduce a data stream obtaining velocity. When data stream peak duration is relatively long, a problem that a processing capability of the first executor is exceeded because excessive data streams flow to the physical machine can still be avoided, so that data stream processing reliability can be improved, and a data loss caused because a data peak arrives when the first executor obtains the data stream can be avoided.

The preceding embodiment of the present invention describes the data processing method implemented by the first executor. The following embodiment of the present invention describes another data processing method implemented by a first executor, the method is applied to a physical machine in a stream system, and the physical machine includes the first executor and a queue manager. As shown in FIG. 5, the another data processing method includes the following steps.

201. The first executor receives a first data set from a second executor, where the second executor is an upstream computing node of the first executor in the stream system, and an amount of data in the first data set is greater than a capacity of a first receiving cache queue of the first executor.

The capacity of the first receiving cache queue represents a maximum amount of data that can be accommodated by the first receiving cache queue.

In this embodiment of the present invention, the first executor is located in the physical machine, the physical machine is deployed in the stream system, the second executor is further deployed in upstream of the first executor in the stream system, and the second executor is an upstream computing node of the first executor in the stream system. For example, the second executor may be an upstream computing node in a physical machine that is the same as the physical machine in which the first executor is located, or may be a computing node in a physical machine that is different from the physical machine in which the first executor is located, and this is not limited herein. The second executor obtains the first data set, the second executor is configured to send the first data set to a downstream computing node of the second executor, and the first executor is configured to receive the first data set from the second executor.

In this embodiment of the present invention, a receiving cache queue is configured on the first executor. To distinguish between different states of receiving cache queues of the first executor, the "first receiving cache queue" is used to describe a queue state when the first executor receives the first data set of the second executor. For the first data set of the second executor, the amount of data included in the first data set is analyzed, and the amount of data refers to a packet size of all data packets included in the first data set. It is determined whether the amount of data in the first data set is greater than the capacity of the first receiving cache queue of the first executor. The capacity of the first receiving cache queue represents the maximum amount of data that can be accommodated by the first receiving cache queue. If the amount of data in the first data set is greater than the capacity of the first receiving cache queue of the first executor, it indicates that in this case, the first receiving cache queue configured on the first executor cannot store the entire first data set, and step 202 may be triggered.

202. The queue manager allocates storage space in a memory of the physical machine to the first receiving cache queue, so as to obtain a second receiving cache queue.

In this embodiment of the present invention, the physical machine further includes the queue manager, and the queue manager works if the amount of data in the first data set is greater than the capacity of the first receiving cache queue of the first executor. In this embodiment of the present invention, the first receiving cache queue configured on the first executor is a queue whose capacity is expansible, and the queue manager may obtain the storage space from the memory of the physical machine, and then, allocate the obtained storage space to the first receiving cache queue, so as to expand the capacity of the first receiving cache queue. To distinguish between receiving cache queues in different states, a first receiving cache queue whose capacity is expanded is defined as the second receiving cache queue. For example, the first receiving cache queue may be expanded according to a preset storage space size, or idle storage space of the current first receiving cache queue may be doubled, so that the capacity of the first receiving cache queue is expanded.

203. The first executor puts the data in the first data set into the second receiving cache queue.

In this embodiment of the present invention, if the first executor obtains the second receiving cache queue obtained by expanding the capacity of the first receiving cache queue by the queue manager, the first executor may put the data in the first data set into the second receiving cache queue. Therefore, in this embodiment of the present invention, the capacity of the first receiving cache queue of the first executor may be expanded, so that all data entering the physical machine in which the first executor is located can be stored, thereby avoiding a loss of the data entering the physical machine.

In some embodiments of the present invention, in addition to the preceding steps, the data processing method provided in this embodiment of the present invention includes the following step.

F1. If the second receiving cache queue is full, the first executor stops receiving data sent by the second executor.

Specifically, in some embodiments of the present invention, after the first executor stores the received first data set in the second receiving cache queue, if the second receiving cache queue is full, it indicates that the first executor cannot receive data any more, and a data loss occurs if data continues to be received. In this case, the first executor may enable a backpressure control policy to stop the first executor from obtaining a data stream, that is, the first executor does not receive a data stream any more. Backpressure control performed by the first executor is similar to a feedback principle in cybernetics, that is, when being overloaded, the first executor takes measures for an upstream computing node of the first executor or an external data source, so that less data is sent to the first executor or data is no longer sent to the first executor, and therefore, load of the first executor is lightened. Therefore, an amount of data entering the physical machine can be reduced, and a data loss caused because the first executor cannot store data can be avoided.

In some embodiments of the present invention, in addition to the preceding steps, the data processing method provided in this embodiment of the present invention includes the following steps.
G1. The first executor processes the data in the first data set to obtain a second data set, where the data in the first data set is obtained by the first executor from the second receiving cache queue, and an amount of data in the second data set is greater than a capacity of a first sending cache queue of the first executor.
G2. The queue manager allocates storage space in the memory of the physical machine to the first sending cache queue, so as to obtain a second sending cache queue.
G3. The first executor stores, in the second sending cache queue, the data in the second data set.

In the foregoing embodiment of the present invention, after the to-be-processed first data set is obtained, the first executor may perform service processing on the to-be-processed first data set according to service processing logic configured for the first executor, so as to obtain the second data set. The service processing logic refers to a specific manner in which the first executor processes data, the service processing logic may be generally determined with reference to a specific application scenario, and this is not limited herein. For example, the service processing logic may be extracting a target field from the first data set, so that the second data set is obtained, or the service processing logic may be adding preset information to the first data set, so that the second data set is obtained.

In the foregoing embodiment of the present invention, a sending cache queue is further configured on the first executor, and the sending cache queue may be implemented by obtaining some storage space by the queue manager in the physical machine from the memory of the physical machine. To distinguish between different states of sending cache queues of the first executor, the "first sending cache queue" is used to describe a queue state when the first executor obtains the second data set. It is determined whether the amount of data in the first data set is greater than the capacity of the first sending cache queue of the first executor. The capacity of the first sending cache queue represents a maximum amount of data that can be accommodated by the first sending cache queue. If the amount of data in the first data set is greater than the capacity of the first sending cache queue of the first executor, it indicates that in this case, the first sending cache queue configured on the first executor cannot store the entire second data set, and step G2 may be triggered.

In the foregoing embodiment of the present invention, the physical machine further includes the queue manager, and the queue manager works if the amount of data in the first data set is greater than the capacity of the first sending cache queue of the first executor. In this embodiment of the present invention, the first sending cache queue configured on the first executor is a queue whose capacity is expansible, and the queue manager may obtain the storage space from the memory of the physical machine, and then, allocate the obtained storage space to the first sending cache queue, so as to expand the capacity of the first sending cache queue. To distinguish between sending cache queues in different states, a first sending cache queue whose capacity is expanded is defined as the second sending cache queue.

In the foregoing embodiment of the present invention, if the first executor obtains the second sending cache queue obtained by expanding the capacity of the first sending cache queue by the queue manager, the first executor may put the data in the second data set into the second sending cache queue. Therefore, in this embodiment of the present invention, the capacity of the first sending cache queue of the first executor may be expanded, so that all data entering the physical machine in which the first executor is located can be stored, thereby avoiding a loss of the data entering the physical machine.

In some embodiments of the present invention, in addition to the preceding steps, the data processing method provided in this embodiment of the present invention includes the following step.

HI. If the second sending cache queue is full, the first executor stops processing data in the second receiving cache queue.

Specifically, in some embodiments of the present invention, after the first executor stores the second data set in the second sending cache queue, if the second sending cache queue is full, it indicates that the first executor cannot store data any more, and a data loss occurs if data continues to be processed. In this case, the first executor may enable the backpressure control policy to stop the first executor from processing the data in the second receiving cache queue and to stop storing data in the second sending cache queue, so as to lighten load of the first executor, thereby avoiding a data loss caused because the first executor cannot store data.

In some embodiments of the present invention, in addition to the preceding steps, the data processing method provided in this embodiment of the present invention includes the following step.

II. If idle storage space in the second receiving cache queue exceeds a preset first threshold, the queue manager releases a part or all of the idle storage space in the second receiving cache queue back into the memory.

In some embodiments of the present invention, in addition to the preceding steps, the data processing method provided in this embodiment of the present invention includes the following step.

12. If storage space of an idle queue in the second sending cache queue exceeds a preset second threshold, the queue manager releases a part or all of the idle storage space in the second sending cache queue back into the memory.

In this embodiment of the present invention, capacities of the second receiving cache queue and the second sending cache queue of the first executor can not only be expanded, but also be reduced, that is, both storage capacities of a receiving cache queue and a sending cache queue can be adjusted according to an actual requirement, so that a maximum quantity of data streams can be stored, and a processing capability of the stream system can be exploited to a greatest extent without a data stream loss. When both the receiving cache queue and the sending cache queue have idle storage space, if the idle storage space exceeds a threshold, storage space of the receiving cache queue and the sending cache queue may be automatically reduced, so that memory usage is reduced.

It may be learned from the example description of the present invention in the preceding embodiment that, a first receiving cache queue whose capacity can be expanded is configured on a first executor, so that a loss of data entering a physical machine can be reduced, and data processing reliability can be improved.

To better understand and implement the foregoing solutions in this embodiment of the present invention, the following uses a corresponding application scenario as an example for detailed description.

As shown in FIG. 5, FIG. 5 is a schematic architectural diagram of a system to which a data processing method is applied. In FIG. 3, a PE 1 is an executor of a source operator 1, a PE 2 is an executor of a source operator 2, a PE 3 is an executor of a source operator 3, a PE 4 is an executor of an intermediate operator 4, a PE 5 is an executor of an intermediate operator 5, a PE 6 is an executor of an intermediate operator 6, a PE 7 is an executor of an end operator 7, and a PE 8 is an executor of an end operator 8. The PE 1 sends data traffic to the PE 4, the PE 4 sends data traffic to the PE 7, the PE 2 sends data traffic to the PE 4, the PE 5, and the PE 6, the PE 3 sends data traffic to the PE 6, and the PE 5 and the PE 6 send data traffic to the PE 8. In FIG. 5, sending cache queues are provided below the PE 1, the PE 2, and the PE 3, receiving cache queues are provided on the left side of the PE 4, the PE 5, and the PE 6, sending cache queues are provided on the right side of the PE 4, the PE 5, and the PE 6, and receiving cache queues are provided below the PE 7 and the PE 8. In this embodiment of the present invention, on a premise that an average stream velocity of a data stream is not greater than a maximum processing capability of a stream system, a data loss problem that may be caused because data peaks arrive at some time periods can be resolved. In this embodiment of the present invention, some measures may be dedicatedly set in all phases in which a problem may occur, so that congestion is prevented in advance or eliminated. For example, in FIG. 5, each PE serves as a minimum unit of data processing logic. For example, the PE 8 conducts congestion to the PE 5 and the PE 6, and the congestion conduction is implemented by using a message channel mechanism. For example, assuming that a transport protocol is used to transmit a message at a bottom layer, when a processing capability of a downstream operator is insufficient, data receiving is stopped, and in this case, an upstream operator cannot send data to the downstream operator. In this way, congestion can be conducted to the upstream operator. Each of the PE 5 and the PE 6 is an upstream PE of the PE 8. After using up all cache areas of the PE 5 and the PE 6, the PE 5 and the PE 6 conduct congestion to source operators of the PE 2 and the PE 3, and the source operators of the PE 2 and the PE 3 enable a processing policy of the source operator. The following uses, for description, an example in which different policies are set for source operators for different problems.

For a source operator, a main problem is that a coming velocity of external data is uncontrollable and volatile. Therefore, a prediction module and a cache module are dedicatedly set to resolve a problem that data traffic cannot be controlled. The prediction module predicts a possible coming velocity of data traffic in a coming period according to historical traffic statistics, so that measures can be prepared in advance. The cache module is configured to: when a data peak arrives without being predicted, temporarily cache data traffic, and then send data to a downstream operator when load of the system is small.

For an intermediate operator, a main problem is that inherent logic of an upstream operator of the intermediate operator causes a data peak, and a data loss occurs provided that the upstream operator of the intermediate operator sends a large amount of data in a short time that exceeds a processing capability of the intermediate operator. A backpressure processing method may be used, or a scalable cache queue may be set to resolve the problem. Backpressure means the following: When being overloaded, the downstream operator takes measures for the upstream operator of the downstream operator, so that less data is sent to the downstream operator or data is no longer sent to the downstream operator, and therefore, load of the downstream operator is lightened. Provided that a processing capability of the downstream operator reaches an upper limit, the downstream operator does not receive data traffic any more, and conducts pressure to the upstream operator of the downstream operator. In this case, the upstream operator cannot send data, and the pressure is conducted to a source operator level by level. The scalable cache queue is used to dynamically expand a cache capacity of the intermediate operator, so that as much pressure as possible is eliminated inside the operator instead of being conducted to the upstream operator. Eliminating the pressure inside the operator means that all available resources are used as much as possible, and when all the available resources are used up, to ensure that no data is lost, congestion can be conducted only outward.

In this embodiment of the present invention, an amount of data received by a source operator is predicted. When the amount of received data and an increase rate exceed thresholds, a receiving velocity of the source operator is reduced. The receiving velocity is first reduced, and if the amount of received data and the increase rate still exceed the thresholds after the receiving velocity is reduced, the receiving velocity is further reduced until data receiving stops. When a receiving queue of a downstream PE is full, data is not received any more, and an upstream PE stops sending data. Congestion is conducted to an upstream operator until the congestion is conducted to the source operator only when all available caches of the operator are used up. Each operator has cache queues: a receiving cache queue and a sending cache queue. In this embodiment of the present invention, a processing capability of the stream system can be exploited to a greatest extent without a data loss.

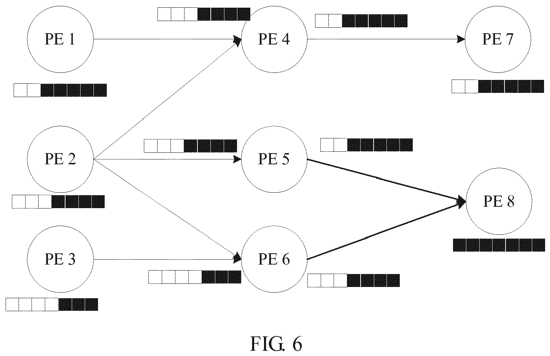

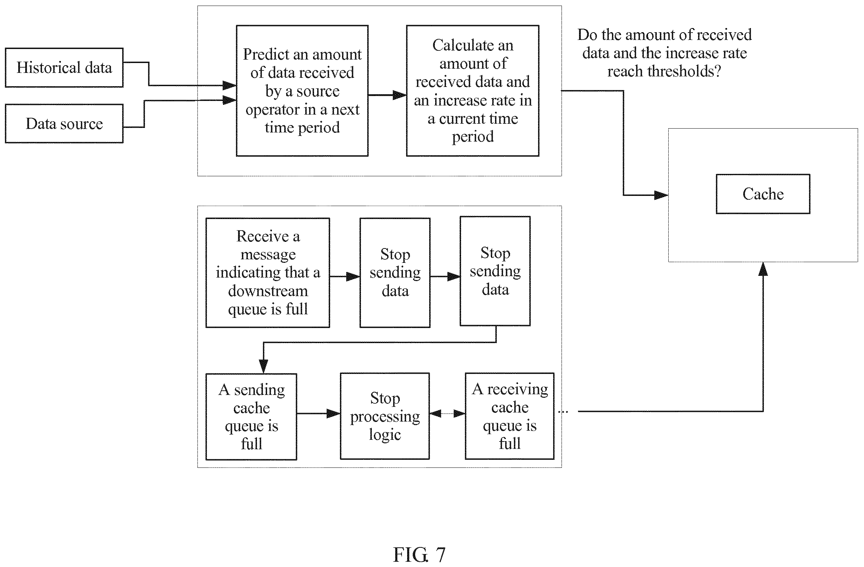

The following first uses an example to describe an implementation policy of a source operator for a data peak. As shown in FIG. 6, FIG. 6 is a schematic diagram of an implementation scenario in which a source operator predicts data traffic according to an embodiment of the present invention. As shown in FIG. 7, FIG. 7 is a schematic diagram of an implementation scenario in which a source operator caches data traffic according to an embodiment of the present invention. A main function of a source operator is to connect to an external data source or generate data. When the source operator generates data, a velocity is relatively easy to control, and a state of an approximately uniform velocity may be maintained to a greatest extent. However, if the source operator connects to the external data source, a velocity cannot be controlled by the source operator, and in this case, the source operator needs to cancel a peak and a valley of external data, so that a variance is reduced and a velocity at which the source operator sends data to a downstream operator is as steady as possible. Therefore, two modules are added for the source operator, one module is a prediction module, and the other module is a cache module. The prediction module predicts, according to an amount of historically received data and a current change rate of a data receiving velocity, a data peak that may arrive, and takes measures in advance. The measures taken by the source operator can reduce a receiving velocity. The cache module is configured to: when the data peak truly arrives, cache data to ensure that data entering a stream system is not lost.

It may be learned from FIG. 6 that, the prediction module in the source operator predicts possible traffic in a next phase according to a processing capability of the system, historical traffic data, and a current increase rate of data traffic. If it is predicted that congestion may arrive, the source operator reduces a velocity of receiving external data to reduce an occurrence possibility of congestion as much as possible, and when prediction is inaccurate, a processing module in the source operator stores data by using the cache module, so as to ensure that the data entering the stream system is not lost. There are many cases in which prediction is inaccurate. For example, it is predicted that a data peak is to arrive soon, but the data peak does not arrive in the end. For another example, it is predicted that no data peak is to occur, but a data peak actually arrives.

It may be learned from FIG. 7 that, the cache module in the source operator uses two data cache policies. Provided that a sending cache queue is full, data is first stored in a greater memory cache area to make full use of a memory capacity. If the memory cache area is also full, persistence is performed on data by writing the data into a disk file, and when the sending cache queue of the source operator is idle, the data in the disk file is extracted and put into the sending cache queue to enter the stream system. In conclusion, with the two modules, the source operator can well resolve a data loss problem that may be caused when there is a data peak, thereby resolving a data loss problem caused by a data peak that occurs because an external data source fluctuates.

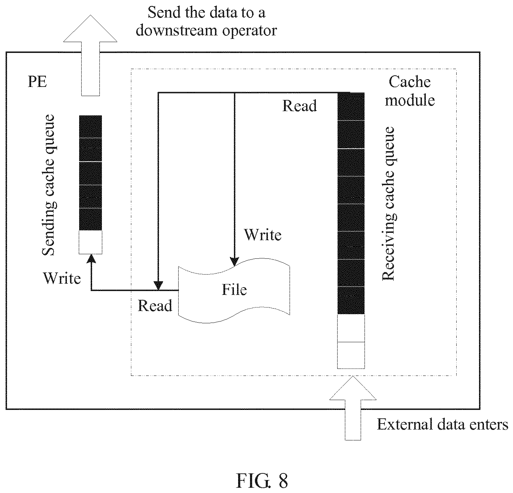

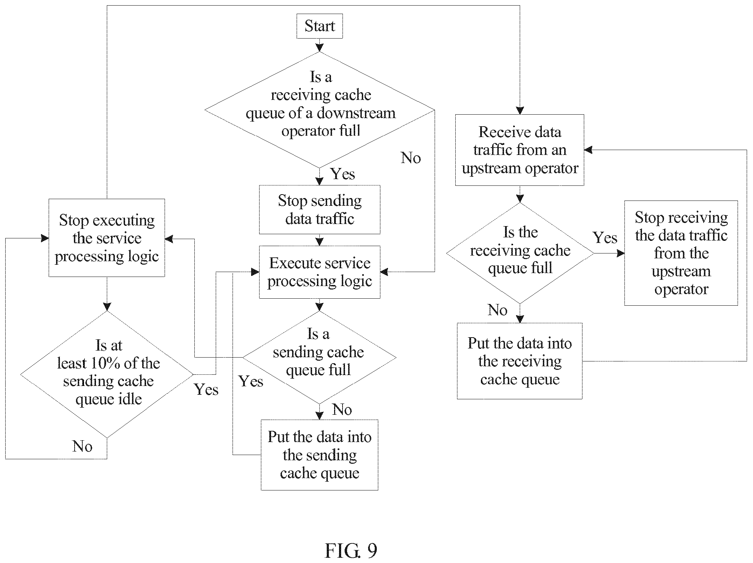

For a data peak generated by an intermediate operator, in this embodiment of the present invention, the following measures are taken to resolve the problem. FIG. 8 is a schematic diagram of an implementation scenario in which an intermediate operator performs backpressure control processing on data traffic according to an embodiment of the present invention. FIG. 9 is a schematic diagram of an implementation scenario of a scalable queue used by an intermediate operator according to an embodiment of the present invention.

It may be learned from FIG. 8 that, provided that backpressure is performed on the intermediate operator by a downstream operator, the intermediate operator tries to use up all available cache areas of the intermediate operator, instead of immediately conducting the backpressure to an upstream operator of the intermediate operator. All the available cache areas include a receiving cache queue and a sending cache queue of the operator. In this way, backpressure conducted to the upstream operator can be reduced as much as possible, because a data peak may pass in a period in which the intermediate operator uses the cache area of the intermediate operator. In this case, the backpressure does not need to be conducted to the upstream operator, so that a processing capability of the stream system can be exploited to a greatest extent without a data loss. Therefore, for the intermediate operator, two measures are set to cache data. One measure is as follows: The receiving cache queue and the sending cache queue that are respectively at a front end and at a back end of the operator are made full use of, operator service logic does not work only when the sending cache queue is full, the operator logic is re-executed when at least 10% of the sending cache queue is idle, and receiving data from the external is stopped only when the receiving cache queue is full. The other measure is as follows: The two queues are converted into scalable cache queues instead of conventional queues of fixed sizes. The scalable queue is a queue whose capacity is automatically expanded when the queue is full. As shown in FIG. 10, when the queue is full, the queue is automatically expanded to be double an original size, and a length of a used part of the queue is reduced, and when the queue is idle, and the length of the used part is reduced to half an original queue length, the queue is automatically reduced to the original size. In this way, congestion can be eliminated to a greatest extent without being conducted to the upstream operator, and the processing capability of the stream system can be exploited to the greatest extent without a data loss.

In this embodiment of the present invention, in an entire stream velocity control process of the source operator and the intermediate operator, congestion may be conducted level by level by using backpressure based on a DAG graph, a scalable queue cache is provided for a large amount of short-time data, a cache policy used by the source operator for a non-uniform velocity of a data source is provided, and congestion caused by the source operator is predicted and processed in advance. In this embodiment of the present invention, on a premise that an average data velocity does not exceed a processing capability of the stream system, it can be ensured that no data loss occurs because data velocities exceed the processing capability at some moments, impact on stream system performance is reduced to a greatest extent, and in this case, availability and reliability of the stream system can be greatly improved.

Please supplement a specific form of an executor, and refer to the disclosure. Actually, the executor may be software, for example, a container, a virtual machine, or a process, and multiple executors may be deployed on one physical machine.

It should be noted that, for ease of description, the preceding method embodiments are represented as a series of actions. However, persons skilled in the art should learn that the present invention is not limited to the described order of the actions, because according to the present invention, some steps may be performed in another order or simultaneously. In addition, persons skilled in the art should also learn that all the embodiments described in the specification are examples of the embodiments, and the related actions and modules are not necessarily mandatory for the present invention.

To better implement the foregoing solutions in the embodiments of the present invention, the following further provides a related apparatus for implementing the foregoing solutions.

As shown in FIG. 11-a, FIG. 11-a shows a physical machine provided in an embodiment of the present invention. The physical machine is applied to a stream system, and the physical machine includes a first executor. The physical machine 1100 includes a prediction module 1101, a velocity control module 1102, and a data receiving module 1103.

The prediction module 1101 is configured to predict traffic of a to-be-processed data stream of the first executor in a first time period according to historical information about processing data by the first executor, so as to obtain prediction information of the traffic of the data stream in the first time period, where the historical information includes traffic information of data processed by the first executor in a historical time period, and the traffic prediction information includes predictors of traffic at multiple moments in the first time period.

The velocity control module 1102 is configured to: if the traffic prediction information includes a predictor that exceeds a threshold, reduce a data obtaining velocity of the first executor from a first velocity to a second velocity.

The data receiving module 1103 is configured to obtain a first data set of the to-be-processed data stream at the second velocity.

In some embodiments of the present invention, as shown in FIG. 11-b, the physical machine 1100 further includes a data cache module 1104.

The data receiving module 1103 is further configured to: if the traffic prediction information includes no predictor that exceeds the threshold, keep the data obtaining velocity of the first executor unchanged at the first velocity, and obtain a second data set of the to-be-processed data stream at the first velocity.

The data cache module 1104 is configured to: if the second data set is greater than a maximum data processing threshold of the first executor, store, in a receiving cache queue of the first executor, a first subset in the second data set.

In some embodiments of the present invention, as shown in FIG. 11-b, the second data set further includes a second subset; and the data cache module 1104 is further configured to: if the receiving cache queue of the first executor is full, store the second subset in an external memory of the first executor, where the second subset includes data that is in the second data set, that is not processed by the first executor, and that is not stored in the receiving cache queue.

In some embodiments of the present invention, as shown in FIG. 11-c, the physical machine 1100 further includes a backpressure control module 1105.

The backpressure control module 1105 is configured to: if the first data set is greater than the maximum data processing threshold of the first executor, stop obtaining data in the to-be-processed data stream.

In some embodiments of the present invention, as shown in FIG. 11-d, the physical machine further includes a data processing module 1106 and a data sending module 1107.

The data processing module 1106 is configured to: process the first data set, so as to obtain a third data set; and store, in a sending cache queue of the first executor, data in the third data set.

The data sending module 1107 is configured to send the data in the third data set to a second executor by using the sending cache queue, so that the second executor processes the data in the third data set, where the second executor is a downstream computing node of the first executor in the stream system.

It may be learned from the example description of the present invention in the preceding embodiment that, because a physical machine may predict traffic of a coming data stream of a first executor according to historical information about processing data by the first executor, if a predictor in traffic prediction exceeds a threshold, a data obtaining velocity of the first executor is reduced from a first velocity to a second velocity, so that the first executor can reduce a data stream obtaining velocity. When data stream peak duration is relatively long, a problem that a processing capability of the first executor is exceeded because excessive data streams flow to the physical machine can still be avoided, so that data stream processing reliability can be improved, and a data loss caused because a data peak arrives when the first executor obtains the data stream can be avoided.

As shown in FIG. 12, FIG. 12 shows a physical machine 1200. The physical machine 1200 is applied to a stream system, and the physical machine 1200 includes a first executor 1201 and a queue manager 1202.

The first executor 1201 is configured to receive a first data set from a second executor, where the second executor is an upstream computing node of the first executor in the stream system, an amount of data in the first data set is greater than a capacity of a first receiving cache queue of the first executor, and the capacity of the first receiving cache queue represents a maximum amount of data that can be accommodated by the first receiving cache queue.

The queue manager 1202 is configured to allocate storage space in a memory of the physical machine to the first receiving cache queue, so as to obtain a second receiving cache queue.

The first executor 1201 is further configured to put the data in the first data set into the second receiving cache queue.

In some embodiments of the present invention, the first executor 1201 is further configured to: if the second receiving cache queue is full, stop receiving data sent by the second executor.

In some embodiments of the present invention, the first executor 1201 is further configured to process the data in the first data set to obtain a second data set, where the data in the first data set is obtained by the first executor from the second receiving cache queue, and an amount of data in the second data set is greater than a capacity of a first sending cache queue of the first executor.

The queue manager 1201 is further configured to allocate storage space in the memory of the physical machine to the first sending cache queue, so as to obtain a second sending cache queue.

The first executor 1201 is further configured to store, in the second sending cache queue, the data in the second data set.

In some embodiments of the present invention, the first executor 1201 is further configured to: if the second sending cache queue is full, stop processing data in the second receiving cache queue.

In some embodiments of the present invention, the queue manager 1202 is further configured to: if idle storage space in the second receiving cache queue exceeds a preset first threshold, release a part or all of the idle storage space in the second receiving cache queue back into the memory.

In some embodiments of the present invention, the queue manager 1202 is further configured to: if storage space of an idle queue in the second sending cache queue exceeds a preset second threshold, release a part or all of the idle storage space in the second sending cache queue back into the memory.

It may be learned from the example description of the present invention in the preceding embodiment that, a first receiving cache queue whose capacity can be expanded is configured on a first executor, so that a loss of data entering a physical machine can be reduced, and data processing reliability can be improved.

It should be noted that content such as information exchange between the modules/units of the apparatus and the execution processes thereof is based on a same concept as the method embodiments of the present invention, and produces the same technical effects as the method embodiments of the present invention. For the specific content, refer to the preceding description in the method embodiments of the present invention, and details are not described herein again.

An embodiment of the present invention further provides a computer storage medium. The computer storage medium stores a program, and the program is used to perform some or all of steps described in the foregoing method embodiments.

The following describes another physical machine provided in an embodiment of the present invention. As shown in FIG. 13, a physical machine 1300 includes:
a receiver 1301, a transmitter 1302, a processor 1303, and a memory 1304 (there may be one or more processors 1303 in the physical machine 1300, and an example in which there is one processor is used in FIG. 13). In some embodiments of the present invention, the receiver 1301, the transmitter 1302, the processor 1303, and the memory 1304 may be connected by using a bus or in another manner, and an example in which a connection is implemented by using a bus is used in FIG. 13.

The memory 1304 may include a read-only memory and a random access memory, and provide an instruction and data for the processor 1303. A part of the memory 1304 may further include a nonvolatile random access memory (English full name: Non-Volatile Random Access Memory, NVRAM for short). The memory 1304 stores an operating system and an operation instruction, an executable module or a data structure, or a subset thereof, or an extended set thereof. The operation instruction may include various operation instructions that are used to implement various operations. The operating system may include various system programs that are used to implement various basic services and process a hardware-based task.

The processor 1303 controls an operation of the physical machine, and the processor 1303 may be further referred to as a central processing unit (English full name: Central Processing Unit, CPU for short). In a specific application, components of the physical machine are coupled together by using a bus system. In addition to a data bus, the bus system includes a power bus, a control bus, and a status signal bus. However, for clear description, various types of buses in the figure are marked as the bus system.

The method disclosed in the foregoing embodiments of the present invention may be applied to the processor 1303, or may be implemented by the processor 1303. The processor 1303 in the physical machine 1300 may be configured to implement a stream velocity control function of an executor. For example, the processor 1303 may be configured to implement a function of a first executor, or the processor 1303 may be configured to implement functions of a first executor and a queue manager. The first executor may be a thread in the physical machine, and the first executor may be deployed on the physical machine by using a virtual machine or a container. The processor 1303 may be an integrated circuit chip and have a signal processing capability. In an implementation process, steps in the foregoing methods can be implemented by using a hardware integrated logical circuit in the processor 1303, or by using instructions in a form of software. The processor 1303 may be a general-purpose processor, a digital signal processor (English full name: digital signal processing, DSP for short), an application-specific integrated circuit (English full name: Application Specific Integrated Circuit, ASIC for short), a field programmable gate array (English full name: Field-Programmable Gate Array, FPGA for short), or another programmable logic device, a discrete gate or a transistor logic device, or a discrete hardware component. The processor 1303 may implement or execute the methods, the steps, and logical block diagrams that are disclosed in the embodiments of the present invention. The general-purpose processor may be a microprocessor, or the processor may be any conventional processor or the like. Steps of the methods disclosed with reference to the embodiments of the present invention may be directly executed and accomplished by means of a hardware decoding processor, or may be executed and accomplished by using a combination of hardware and software modules in the decoding processor. The software module may be located in a mature storage medium in the art, such as a random access memory, a flash memory, a read-only memory, a programmable read-only memory, an electrically erasable programmable memory, or a register. The storage medium is located in the memory 1304, and the processor 1303 reads information from the memory 1304 and completes the steps in the foregoing methods in combination with hardware in the processor 1303.

The receiver 1301 may be configured to: receive entered digital or character information, and generate signal input related to a related setting and function control of the physical machine. The transmitter 1302 may include a display device such as a screen, and the transmitter 1302 may be configured to output digital or character information by using an external interface.

In this embodiment of the present invention, the processor 1303 is configured to perform steps in either of the method embodiments in FIG. 4 and FIG. 5.

In addition, it should be noted that the described apparatus embodiment is merely an example. The units described as separate parts may or may not be physically separate, and parts displayed as units may or may not be physical units, may be located in one position, or may be distributed on a plurality of network units. Some or all of the modules may be selected according to actual needs to achieve the objectives of the solutions of the embodiments. In addition, in the accompanying drawings of the apparatus embodiments provided in the present invention, connection relationships between modules indicate that the modules have communication connections to each other. The communication connection may be specifically implemented as one or more communications buses or signal cables. Persons of ordinary skill in the art may understand and implement the embodiments of the present invention without creative efforts.

Based on the description of the foregoing implementations, persons skilled in the art may clearly understand that the present invention may be implemented by software in addition to necessary universal hardware, or by dedicated hardware including a dedicated integrated circuit, a dedicated CPU, a dedicated memory, a dedicated component, and the like. Generally, any function that can be performed by a computer program can be easily implemented by using corresponding hardware. Moreover, specific hardware structures used to achieve a same function may have various forms, for example, an analog circuit, a digital circuit, or a dedicated circuit. However, for the present invention, a software program implementation is a better implementation in most cases. Based on such an understanding, the technical solutions of the present invention essentially or the part contributing to the prior art may be implemented in a form of a software product. The software product is stored in a readable storage medium, such as a floppy disk, a USB flash drive, a removable hard disk, a read-only memory (ROM, Read-Only Memory), a random access memory (RAM, Random Access Memory), a magnetic disk, or an optical disc of a computer, and includes several instructions for instructing a computer device (which may be a personal computer, a server, a network device, or the like) to execute the methods described in the embodiments of the present invention.

The foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof.

## Claims

1. A data processing method, wherein the method is performed by a physical machine (1100, 1200, 1300) in a stream system, the physical machine comprises a first executor (1201), and the method comprises:
predicting traffic of a to-be-processed data stream of the first executor (1201) in a first time period according to historical information about processing data by the first executor, so as to obtain prediction information of the traffic of the data stream in the first time period, wherein the historical information comprises traffic information of data processed by the first executor in a historical time period, and the traffic prediction information comprises predictors of traffic at multiple moments in the first time period;
if the traffic prediction information comprises a predictor that exceeds a threshold, reducing a data obtaining velocity of the first executor (1201) from a first velocity to a second velocity; and
obtaining a first data set of the to-be-processed data stream at the second velocity;
**characterized in that** the method further comprises:
if the first data set is greater than a maximum data processing threshold of the first executor (1201), stopping obtaining data in the to-be-processed data stream by enabling a backpressure control policy,
wherein the maximum data processing threshold of the first executer is a value that is determined according to a hardware configuration or a software configuration of the first executer that indicates a maximum amount of data that can be processed in a unit time.

2. The method according to claim 1, wherein the method further comprises:
if the traffic prediction information comprises no predictor that exceeds the threshold, keeping the data obtaining velocity of the first executor (1201) unchanged at the first velocity, and obtaining a second data set of the to-be-processed data stream at the first velocity; and
if the second data set is greater than the maximum data processing threshold of the
first executor (1201), storing, in a receiving cache queue of the first executor, a first subset in the second data set.

3. The method according to claim 2, wherein the second data set further comprises a second subset, and the method further comprises:
if the receiving cache queue of the first executor (1201) is full, storing the second subset in an external memory of the first executor, wherein the second subset comprises a data packet that is in the second data set, that is not processed by the first executor, and that is not stored in the receiving cache queue.

4. A physical machine (1100, 1200, 1300), wherein the physical machine is configured to be used in a stream system, the physical machine comprises a first executor (1201), and the physical machine comprises:
a prediction module (1101), configured to predict traffic of a to-be-processed data stream of the first executor (1201) in a first time period according to historical information about processing data by the first executor, so as to obtain prediction information of the traffic of the data stream in the first time period, wherein the historical information comprises traffic information of data processed by the first executor in a historical time period, and the traffic prediction information comprises predictors of traffic at multiple moments in the first time period;
a velocity control module (1102), configured to: if the traffic prediction information comprises a predictor that exceeds a threshold, reduce a data obtaining velocity of the first executor (1201) from a first velocity to a second velocity; and
a data receiving module (1103), configured to obtain a first data set of the to-be-processed data stream at the second velocity;
**characterized in that** the physical machine (1100, 1200, 1300) further comprises a backpressure control module (1105); and
the backpressure control module (1105) is configured to: if the first data set is greater than a maximum data processing threshold of the first executor (1201), stop obtaining data in the to-be-processed data stream by enabling a backpressure control policy, wherein the maximum data processing threshold of the first executer is a value that is determined according to a hardware configuration or a software configuration of the first executer that indicates a maximum amount of data that can be processed in a unit time.

5. The physical machine (1100, 1200, 1300) according to claim 4, wherein the physical machine further comprises a data cache module (1104); the data receiving module (1103) is further configured to: if the traffic prediction information comprises no predictor that exceeds the threshold, keep the data obtaining velocity of the first executor (1201) unchanged at the first velocity, and obtain a second data set of the to-be-processed data stream at the first velocity; and the data cache module (1104) is configured to: if the second data set is greater than the maximum data processing threshold of the first executor (1201), store, in a receiving cache queue of the first executor, a first subset in the second data set.

6. The physical machine (1100, 1200, 1300) according to claim 5, wherein the second data set further comprises a second subset; and the data cache module (1104) is further configured to: if the receiving cache queue of the first executor (1201) is full, store the second subset in an external memory of the first executor, wherein the second subset comprises data that is in the second data set, that is not processed by the first executor, and that is not stored in the receiving cache queue.

## Patentansprüche

1. Datenverarbeitungsverfahren, wobei das Verfahren durch einen physischen Computer (1100, 1200, 1300) in einem Stromsystem durchgeführt wird, wobei der physische Computer einen ersten Executor (1201) umfasst, und das Verfahren Folgendes umfasst:
Vorhersagen eines Verkehrs eines zu verarbeitenden Datenstroms des ersten Executors (1201) in einem ersten Zeitraum gemäß von historischen Informationen über ein Verarbeiten von Daten durch den ersten Executor, um Vorhersageinformationen des Verkehrs des Datenstroms in dem ersten Zeitraum zu erhalten, wobei die historischen Informationen Verkehrsinformationen von Daten umfassen, die durch den ersten Executor in einem historischen Zeitraum verarbeitet werden, und die Verkehrsvorhersageinformationen Vorhersagefunktionen des Verkehrs zu mehreren Zeitpunkten in dem ersten Zeitraum umfassen;
wenn die Verkehrsvorhersageinformationen eine Vorhersagefunktion umfassen, die eine Schwelle überschreitet, Reduzieren einer Datenerhaltungsgeschwindigkeit des ersten Executors (1201) von einer ersten Geschwindigkeit auf eine zweite Geschwindigkeit; und
Erhalten eines ersten Datensatzes des zu verarbeitenden Datenstroms bei der zweiten Geschwindigkeit;
**dadurch gekennzeichnet, dass** das Verfahren ferner Folgendes umfasst:
wenn der erste Datensatz über einer maximalen Datenverarbeitungsschwelle des ersten Executors (1201) liegt, Aufhören Daten in dem zu verarbeitenden Datenstrom durch Aktivieren einer Gegendrucksteuerungsrichtlinie zu erhalten, wobei die maximale Datenverarbeitungsschwelle des ersten Executors ein Wert ist, der gemäß einer Hardwarekonfiguration oder einer Softwarekonfiguration des ersten Executors bestimmt wird, der eine maximale Datenmenge angibt, die in einer Zeiteinheit verarbeitet werden kann.

2. Verfahren nach Anspruch 1, wobei das Verfahren ferner Folgendes umfasst:
wenn die Verkehrsvorhersageinformationen keine Vorhersagefunktion umfassen, die die Schwelle überschreitet, Unverändertbelassen der Datenerhaltungsgeschwindigkeit des ersten Executors (1201) bei der ersten Geschwindigkeit und Erhalten eines zweiten Datensatzes des zu verarbeitenden Datenstroms bei der ersten Geschwindigkeit; und
wenn der zweite Datensatz über der maximalen Datenverarbeitungsschwelle des ersten Executors (1201) liegt, Speichern einer ersten Teilmenge in dem zweiten Datensatz in einer Empfangs-Cachewarteschlange des ersten Executors.

3. Verfahren nach Anspruch 2, wobei der zweite Datensatz ferner eine zweite Teilmenge umfasst und das Verfahren ferner Folgendes umfasst:
wenn die Empfangscachewarteschlange des ersten Executors (1201) voll ist, Speichern der zweiten Teilmenge in einem externen Speicher des ersten Executors, wobei die zweite Teilmenge ein Datenpaket umfasst, das in der zweiten Datenmenge ist, das nicht durch den Executor verarbeitet wird und das nicht in der Empfangs-Cachewarteschlange gespeichert ist.

4. Physischer Computer (1100, 1200, 1300), wobei der physische Computer konfiguriert ist, um in einem Stromsystem genutzt zu werden, wobei der physische Computer einen ersten Executor (1201) umfasst und der physische Computer Folgendes umfasst:
ein Vorhersagemodul (1101), das konfiguriert ist, um den Verkehr eines zu verarbeitenden Datenstroms des ersten Executors (1201) in einem ersten Zeitraum gemäß von historischen Informationen über ein Verarbeiten von Daten durch den ersten Executor vorherzusagen, sodass Vorhersageinformationen des Verkehrs des Datenstroms in dem ersten Zeitraum erhalten werden, wobei die historischen Informationen Verkehrsinformationen von Daten umfassen, die durch den ersten Executor in einem historischen Zeitraum verarbeitet werden, und die Verkehrsvorhersageinformationen Vorhersagefunktionen des Verkehrs zu mehreren Zeitpunkten in dem ersten Zeitraum umfassen;
ein Geschwindigkeitssteuerungsmodul (1102), das zu Folgendem konfiguriert ist:
wenn die Verkehrsvorhersageinformationen eine Vorhersagefunktion umfassen, die eine Schwelle überschreitet, Reduzieren einer Datenerhaltungsgeschwindigkeit des ersten Executors (1201) von einer ersten Geschwindigkeit auf eine zweite Geschwindigkeit; und
ein Datenempfangsmodul (1103), das konfiguriert ist, um einen ersten Datensatz des zu verarbeitenden Datenstroms bei der zweiten Geschwindigkeit zu erhalten;
**dadurch gekennzeichnet, dass** der physische Computer (1100, 1200, 1300) ferner ein Gegendrucksteuerungsmodul (1105) umfasst; und
das Gegendrucksteuerungsmodul (1105) zu Folgendem konfiguriert ist:
wenn der erste Datensatz über einer maximalen Datenverarbeitungsschwelle des ersten Executors (1201) liegt, Aufhören Daten in dem zu verarbeitenden Datenstrom durch Aktivieren einer Gegendrucksteuerungsrichtlinie zu erhalten, wobei die maximale Datenverarbeitungsschwelle des ersten Executors ein Wert ist, der gemäß einer Hardwarekonfiguration oder einer Softwarekonfiguration des ersten Executors bestimmt wird, der eine maximale Datenmenge angibt, die in einer Zeiteinheit verarbeitet werden kann.

5. Physischer Computer (1100, 1200, 1300) nach Anspruch 4, wobei der physische Computer ferner ein Daten-Cachemodul (1104) umfasst;
wobei das Datenempfangsmodul (1103) ferner zu Folgendem konfiguriert ist:
wenn die Verkehrsvorhersageinformationen keine Vorhersagefunktion umfassen, die die Schwelle überschreitet, Unverändertbelassen der Datenerhaltungsgeschwindigkeit des ersten Executors (1201) bei der ersten Geschwindigkeit und Erhalten eines zweiten Datensatzes des zu verarbeitenden Datenstroms bei der ersten Geschwindigkeit; und
das Daten-Cachemodul (1104) zu Folgendem konfiguriert ist:
wenn der zweite Datensatz über der maximalen Datenverarbeitungsschwelle des ersten Executors (1201) liegt, Speichern einer ersten Teilmenge in dem zweiten Datensatz in einer Empfangs-Cachewarteschlange des ersten Executors.

6. Physischer Computer (1100, 1200, 1300) nach Anspruch 5, wobei der zweite Datensatz ferner eine zweite Teilmenge umfasst; und
das Daten-Cachemodul (1104) ferner zu Folgendem konfiguriert ist:
wenn die Empfangs-Cachewarteschlange des ersten Executors (1201) voll ist, Speichern der zweiten Teilmenge in einem externen Speicher des ersten Executors, wobei die zweite Teilmenge Daten umfasst, die in der zweiten Datenmenge sind, die nicht durch den Executor verarbeitet werden und die nicht in der Empfangs-Cachewarteschlange gespeichert sind.

## Revendications

1. Procédé de traitement de données, le procédé étant effectué par une machine physique (1100, 1200, 1300) dans un système de flux, la machine physique comprenant un premier exécuteur (1201), et le procédé comprenant :
la prédiction du trafic d'un flux de données à traiter du premier exécuteur (1201) dans une première période de temps selon des informations historiques sur le traitement des données par le premier exécuteur, de manière à obtenir des informations de prédiction du trafic du flux de données dans la première période de temps, les informations historiques comprenant des informations de trafic de données traitées par le premier exécuteur dans une période de temps historique, et les informations de prédiction de trafic comprenant des prédicteurs de trafic à plusieurs instants dans la première période de temps ;
si les informations de prédiction de trafic comprennent un prédicteur qui dépasse un seuil, la réduction d'une vitesse d'obtention de données du premier exécuteur (1201) d'une première vitesse à une seconde vitesse ; et
l'obtention d'un premier ensemble de données du flux de données à traiter au niveau de la seconde vitesse ;
**caractérisé en ce que** le procédé comprend en outre :
si le premier ensemble de données est supérieur à un seuil de traitement de données maximum du premier exécuteur (1201), l'arrêt de l'obtention de données dans le flux de données à traiter en activant une politique de contrôle de contre-pression, dans lequel le seuil de traitement de données maximum du premier exécuteur est une valeur qui est déterminée en fonction d'une configuration matérielle ou d'une configuration logicielle du premier exécuteur qui indique une quantité maximale de données pouvant être traitées dans une unité de temps.

2. Procédé selon la revendication 1, le procédé comprenant en outre :
si les informations de prédiction de trafic ne comprennent aucun prédicteur qui dépasse le seuil, le fait de maintenir inchangées des données d'obtention de la vitesse du premier exécuteur (1201) au niveau de la première vitesse, et l'obtention d'un second ensemble de données du flux de données à traiter à la première vitesse ; et si le second ensemble de données est supérieur au seuil de traitement de données maximum du premier exécuteur (1201), le stockage, dans une file d'attente d'antémémoire de réception du premier exécuteur, un premier sous-ensemble dans le second ensemble de données.

3. Procédé selon la revendication 2, dans lequel le second ensemble de données comprend en outre un second sous-ensemble, et le procédé comprend en outre :
si la file d'attente d'antémémoire de réception du premier exécuteur (1201) est pleine, le stockage du second sous-ensemble dans une mémoire externe du premier exécuteur, dans lequel le second sous-ensemble comprend un paquet de données qui est dans le second ensemble de données, qui n'est pas traité par le premier exécuteur, et qui n'est pas stocké dans la file d'attente d'antémémoire de réception.

4. Machine physique (1100, 1200, 1300), dans laquelle la machine physique est configurée pour être utilisée dans un système de flux, la machine physique comprend un premier exécuteur (1201) et la machine physique comprend :
un module de prédiction (1101), configuré pour prédire le trafic d'un flux de données à traiter du premier exécuteur (1201) dans une première période de temps selon des informations historiques sur le traitement des données par le premier exécuteur, de manière à obtenir des informations de prédiction du trafic du flux de données dans la première période de temps, dans lequel les informations historiques comprennent des informations de trafic de données traitées par le premier exécuteur dans une période de temps historique, et les informations de prédiction de trafic comprennent des prédicteurs de trafic à plusieurs instants dans la première période de temps ;
un module de contrôle de vitesse (1102), configuré pour :
si les informations de prédiction de trafic comprennent un prédicteur qui dépasse un seuil, réduire une vitesse d'obtention de données du premier exécuteur (1201) d'une première vitesse à une seconde vitesse ; et
un module de réception de données (1103), configuré pour obtenir un premier ensemble de données du flux de données à traiter au niveau de la seconde vitesse ;
**caractérisé en ce que** la machine physique (1100, 1200, 1300) comprend en outre un module de contrôle de contre-pression (1105) ; et
le module de contrôle de contre-pression (1105) étant configuré pour :
si le premier ensemble de données est supérieur à un seuil de traitement de données maximum du premier exécuteur (1201), cesser d'obtenir des données dans le flux de données à traiter en activant une politique de contrôle de contre-pression, dans lequel le seuil de traitement de données maximum du premier exécuteur est une valeur qui est déterminée en fonction d'une configuration matérielle ou d'une configuration logicielle du premier exécuteur qui indique une quantité maximale de données pouvant être traitées dans une unité de temps.

5. Machine physique (1100, 1200, 1300) selon la revendication 4,
dans laquelle
la machine physique comprend en outre un module d'antémémoire de données (1104) ;
le module de réception de données (1103) étant en outre configuré pour :
si les informations de prédiction de trafic ne comprennent aucun prédicteur qui dépasse le seuil, garder les données d'obtention de la vitesse du premier exécuteur (1201) inchangées au niveau de la première vitesse, et obtenir un second ensemble de données du flux de données à traiter à la première vitesse ; et
le module d'antémémoire de données (1104) étant configuré pour :
si le second ensemble de données est supérieur au seuil de traitement de données maximum du premier exécuteur (1201), stocker, dans une file d'attente d'antémémoire de réception du premier exécuteur, d'un premier sous-ensemble dans le second ensemble de données.

6. Machine physique (1100, 1200, 1300) selon la revendication 5,
dans laquelle
le second ensemble de données comprend en outre un second sous-ensemble ; et le module d'antémémoire de données (1104) étant en outre configuré pour : si la file d'attente d'antémémoire de réception du premier exécuteur (1201) est pleine, stocker le second sous-ensemble dans une mémoire externe du premier exécuteur, le second sous-ensemble comprenant des données qui sont dans le second ensemble de données, qui ne sont pas traitées par le premier exécuteur, et qui ne sont pas stockées dans la file d'attente d'antémémoire de réception.
